# DEMANDE DE BREVET EUROPEEN

(11) **EP 4 102 600 A1**
(43) Date de publication de la demande: **14.12.2022**
(21) Numéro de dépôt: 22174929.4
(22) Date de dépôt: 23.05.2022
(51) Int. Cl.: H01M 8/04, F01N 1/00, F01N 1/02, F01N 1/04, F01N 13/16, H01M 8/0662, F01N 3/00, F01N 1/24

(54) **SILENCIEUX D'ÉCHAPPEMENT POUR UNE PILE À COMBUSTIBLE**

(30) Priorité: 10.06.2021 FR 2106108
(71) Demandeur: NOVARES France, 92140 Clamart (FR)
(72) Inventeur: BRUZZESE, Daniel, 05000 GAP (FR); JEAN, Thomas, 62150 HOUDAIN (FR)
(74) Mandataire: Germain Maureau

(57) **Abrégé**

L'invention concerne un silencieux (20) d'échappement pour une pile à combustible, comprenant :
- un boîtier (22) définissant une chambre interne (24), ledit boîtier (22) possédant un orifice d'entrée (21), à travers lequel peut entrer un fluide d'échappement en provenance d'une pile à combustible (10), et un orifice de sortie (23), à travers lequel peut sortir le fluide d'échappement, et ledit boîtier (22) logeant dans la chambre interne (24) :
- un conduit interne (26) traversé par un canal central (262) d'acheminement d'un fluide d'échappement, ledit conduit interne (26) possédant une paroi périphérique munie d'au moins une ouverture traversante (25), ladite ouverture traversante (25) étant fermée par un élément de séparation (32), et
- au moins une chambre périphérique (27, 27', 27") disposée autour du conduit interne (26) de manière à entourer totalement l'ouverture traversante (25), la chambre périphérique (27, 27', 27") pouvant être au moins partiellement remplie avec un élément d'absorption acoustique (29),
dans lequel l'élément de séparation (32) est formé dans un matériau hydrophobe, de manière à empêcher une circulation d'eau entre le canal central (262) et la chambre périphérique (27, 27', 27"), le matériau étant également poreux à l'air, de manière à permettre une circulation de gaz entre le canal central (262) et la chambre périphérique (27, 27', 27").

## Description

La présente invention concerne un silencieux d'échappement pour une pile à combustible. La pile à combustible pourra notamment équiper un véhicule automobile.

Les piles à combustibles produisent de l'électricité à partir de réactions chimiques. Les réactions chimiques font généralement réagir un carburant, tel que de l'hydrogène, avec de l'oxygène en tant que réactif et produisent un courant électrique, de la chaleur et de l'eau à l'état de vapeur. Ce courant électrique permet d'alimenter le moteur électrique pour la propulsion du véhicule et de charger une batterie utilisée comme réservoir d'énergie. Le gaz d'échappement évacué de la pile à combustible est ensuite acheminé le long d'un circuit d'échappement formé d'un ou plusieurs tuyaux d'échappement reliés ensemble, les tuyaux aboutissant à une tuyère de sortie à travers laquelle le gaz d'échappement est expulsé vers l'extérieur.

De manière classique, des silencieux sont disposés le long du circuit d'échappement de manière à éliminer les bruits générés par le compresseur et par le passage du gaz dans les tuyaux d'échappement. Ces silencieux sont généralement formés d'un boîtier à l'intérieur duquel est disposé un matériau insonorisant.

Toutefois, lorsque la température de l'air à l'extérieur est basse, il peut se produire un phénomène de condensation du gaz sur les parois internes des tuyaux, qui amène le gaz d'échappement à progressivement circuler à l'intérieur des tuyaux sous forme d'un mélange de vapeur d'eau et d'eau de condensation. En passant à travers les silencieux, cette eau peut imprégner le matériau insonorisant, voire remplir partiellement les cavités acoustiques ce qui aboutit souvent à une détérioration des capacités d'atténuation acoustique dudit matériau.

De manière à éviter ce problème, les solutions proposées actuellement consistent à installer des réservoirs de décantation sous les tuyaux d'échappement et en amont des silencieux. Ces réservoirs de décantation permettent de recueillir l'eau de condensation qui s'écoule par gravité à travers des ouvertures ménagées dans la partie basse des tuyaux d'échappement.

L'inconvénient de ces solutions est qu'elles nécessitent des aménagements additionnels qui accroissent le poids et le coût du système d'échappement. Par ailleurs, ces solutions ne permettent pas toujours d'éviter que de l'eau vienne circuler à l'intérieur des silencieux et imprégner le matériau insonorisant des silencieux.

L'invention vise donc à proposer un silencieux d'échappement qui évite les problèmes susmentionnés de l'art antérieur.

A cet effet, l'invention concerne un silencieux d'échappement pour une pile à combustible, comprenant :
- un boîtier définissant une chambre interne, ledit boîtier possédant un orifice d'entrée, à travers lequel peut entrer un fluide d'échappement en provenance d'une pile à combustible, et un orifice de sortie, à travers lequel peut sortir le fluide d'échappement, et ledit boîtier logeant dans la chambre interne :
- un conduit interne traversé par un canal central d'acheminement d'un fluide d'échappement, ledit conduit interne possédant une paroi périphérique munie d'au moins une ouverture traversante, ladite ouverture traversante étant fermée par un élément de séparation, et
- au moins une chambre périphérique disposée autour du conduit interne de manière à entourer totalement l'ouverture traversante, la chambre périphérique pouvant être au moins partiellement remplie avec un élément d'absorption acoustique,
dans lequel l'élément de séparation est formé dans un matériau hydrophobe, de manière à empêcher une circulation d'eau entre le canal central et la chambre périphérique, le matériau étant également poreux à l'air, de manière à permettre une circulation des gaz d'échappement entre le canal central et la chambre périphérique.

Ainsi configuré, le silencieux de l'invention permettra de réduire efficacement les bruits générés par le passage des gaz d'échappement à l'intérieur du canal central, tout en évitant que de l'eau vienne s'infiltrer à l'intérieur des chambres périphériques.

Le silencieux de l'invention pourra également comprendre une ou plusieurs des caractéristiques suivantes :
- la paroi périphérique du conduit interne est munie d'une pluralité d'ouvertures traversantes espacées le long d'une direction axiale définie par le conduit interne, chaque ouverture traversante étant totalement entourée par une chambre périphérique disposée autour du conduit interne, ladite chambre périphérique étant au moins partiellement remplie avec un élément d'absorption acoustique, chaque ouverture traversante étant par ailleurs fermée par un élément de séparation hydrophobe et poreux à l'air.
- l'élément de séparation possède une forme tubulaire à section circulaire ou en U, l'élément de séparation étant disposé à l'intérieur du conduit interne de manière à recouvrir toutes les ouvertures traversantes dudit conduit interne.
- l'élément de séparation est constitué d'un matériau non tissé imprégné d'un produit hydrophobe.
- le produit hydrophobe est à base de fluor.
- l'élément de séparation possède une perméabilité à l'air supérieure ou égale à 200 l/m²/s.
- l'élément de séparation possède une résistivité à l'air inférieure à 400000 N.s.m-4
- l'élément d'absorption acoustique est formé d'une mousse, notamment une mousse polymère.
- chaque chambre périphérique contient un élément d'absorption acoustique de matière différente d'une chambre à une autre
- le silencieux comprend en outre un réservoir de liquide disposé sous le conduit interne, ledit réservoir étant configuré pour recevoir un liquide circulant dans la chambre interne à la fois en amont et en aval du conduit interne, ledit réservoir possédant au moins un orifice destiné à évacuer le liquide vers l'extérieur.
- le boîtier est muni d'un passage amont disposé en aval de l'orifice d'entrée et en amont du conduit interne et d'un passage aval disposé en aval du conduit interne et en amont de l'orifice de sortie, le passage amont, respectivement aval, communiquant avec le réservoir de liquide de telle sorte qu'un liquide circulant dans le boîtier peut s'écouler au travers dudit passage amont, respectivement dudit passage aval, avant de circuler, respectivement après avoir circulé, au travers du canal central.

D'autres caractéristiques et avantages de l'invention se dégageront de la description qui va suivre, en regard des dessins annexés représentant à titre d'exemples non limitatifs plusieurs formes de réalisation d'un silencieux selon l'invention.
[Fig. 1] est une vue d'un système d'échappement pour une pile à combustible.
[Fig. 2] est une vue longitudinale d'un silencieux selon un premier mode de réalisation de l'invention.
[Fig. 3] est une vue frontale du silencieux de la figure 2.
[Fig. 4a] est une vue en coupe du silencieux de la figure 2, selon le plan de coupe AA de la figure 3.
[Fig. 4b] est une vue en coupe du silencieux de la figure 2, selon le plan de coupe BB de la figure 3.
[Fig. 4c] est une vue similaire à la figure 4a, dans un deuxième mode de réalisation de l'invention.
[Fig. 5] est une vue schématique du silencieux de la figure 2.
[Fig. 6] est un graphique représentant les variations de l'atténuation acoustique (en dB) mesurée en fonction de la fréquence (en Hz) d'un silencieux non conforme à l'invention et de plusieurs silencieux conformes à l'invention.

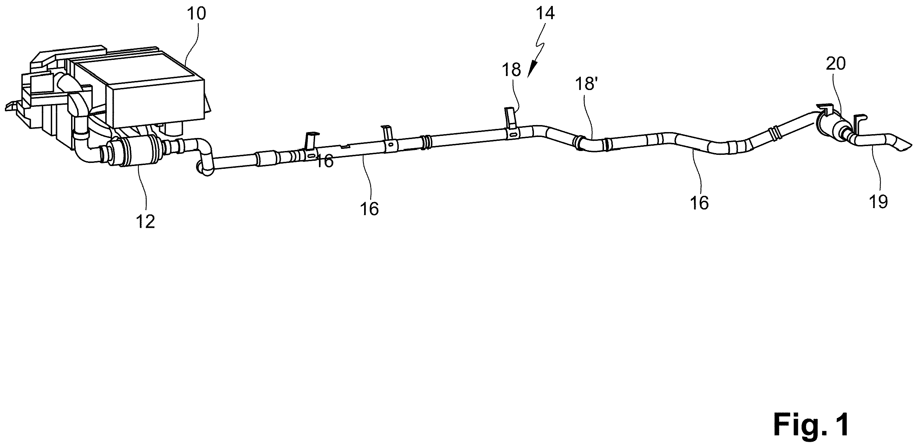

En référence à la figure 1, il est représenté une pile à combustible 10 produisant de l'énergie électrique par réaction électrochimique entre un carburant, comme de l'hydrogène, et l'air prélevé à l'extérieur. Le gaz d'échappement produit lors de cette réaction est évacué à travers un système d'échappement 14 formé par une pluralité de conduits 16 connectés ensemble au moyen d'éléments de jonction 18, 18', les conduits 16 étant reliés en amont à une compresseur 12 destiné à comprimer l'air d'admission et en aval à une tuyère de sortie 19 à travers laquelle le gaz d'échappement est expulsé à l'extérieur. A proximité de la tuyère de sortie 19 est disposé un silencieux 20 selon l'invention. Ce silencieux 20 est destiné à atténuer les bruits générés lors du passage du gaz d'échappement à l'intérieur du système d'échappement 14.

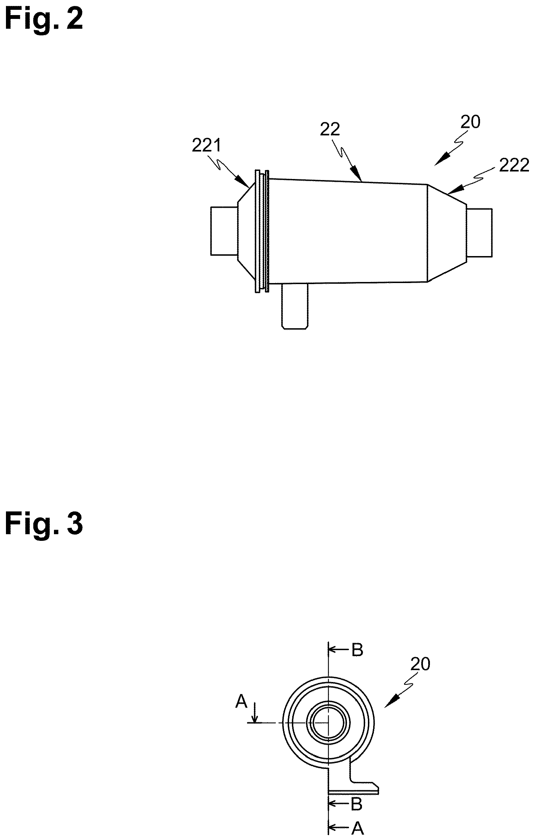

Tel que représenté sur les figures 2, 3, 4a et 4b, un silencieux 20 selon un premier mode de réalisation de l'invention comprend un boîtier 22 définissant une chambre interne 24. Le boîtier 22 est formé d'une première partie 221 en forme d'entonnoir, ladite première partie 221 définissant un orifice d'entrée 21, à travers lequel peut entrer un fluide d'échappement en provenance de la pile à combustible 10, et d'une deuxième partie 222, possédant une forme sensiblement cylindrique centrée sur un axe longitudinal X, ladite deuxième partie 222 étant conformée selon une forme d'entonnoir sur son extrémité opposée à celle jouxtant la première partie 221, ladite extrémité définissant un orifice de sortie 23, à travers lequel peut sortir le fluide d'échappement. Les première et deuxième parties 221, 222 seront avantageusement connectées ensemble par des éléments de liaison mécaniques, par exemple par clippage.

La chambre interne 24 du boîtier 22 sert de logement à un conduit interne 26 de forme cylindrique s'étendant axialement entre la première partie 221 du boîtier 22 et la deuxième partie 222 du boîtier 22, ledit conduit interne 26 formant un canal central 262 communiquant de manière fluidique avec l'orifice d'entrée 21 et l'orifice de sortie 23. Le conduit interne 26 est muni d'une pluralité d'ouvertures traversantes 25 espacées dans la direction axiale, chaque ouverture traversante 25 débouchant radialement sur une chambre périphérique 27 disposée autour du conduit interne 26 de manière à entourer totalement l'ouverture traversante 25. A l'exception de deux chambres périphériques 27', 27" situées à chacune des extrémités du boîtier 22, les chambres périphériques 27 sont définies chacune par une portion annulaire de la surface intérieure 223 de la paroi externe du boîtier 22 et par deux parois latérales 28 orientées selon une direction radiale, les parois latérales 28 s'étendant depuis ladite surface intérieure 223 jusqu'à une paroi périphérique externe 261 du conduit interne 26. Dans une forme avantageuse de l'invention, les parois latérales 28 seront venues de matière avec le conduit interne 26. Chaque chambre périphérique 27 est au moins partiellement remplie avec un élément d'absorption acoustique 29. Dans une autre variante de l'invention, chaque chambre périphérique 27 pourra contenir un élément d'absorption acoustique 29 de matière, de composition et/ou de performances acoustiques différentes des autres chambres périphériques, Cet élément d'absorption acoustique 29 sera avantageusement formé dans un matériau choisi parmi les mousses polymères, notamment les mousses polyuréthane ou les mousses polyuréthane recouverte d'un film laminé en polypropylène ou polyéthylène, et les matériaux comprenant des fibres polymères, notamment comprenant des fibres polypropylène et des fibres polyéthylène, et de préférence comprenant 30% de fibres polypropylène et 70% de fibres polyéthylène. Ainsi configurées, les chambres périphériques 27 permettent d'atténuer les ondes acoustiques générées par le compresseur et par le passage du gaz d'échappement dans les conduits d'échappement. Dans une autre configuration de l'invention, il sera envisageable de laisser vides certaines des chambres périphériques 27. La présence ou l'absence d'un élément d'absorption acoustique 29 dans chacune des chambres périphériques 27 dépendra des fréquences spécifiques à traiter en priorité.

Les chambres périphériques 27' et 27" sont définies quant à elles par une section conique de la surface intérieure 223 de la paroi externe du boîtier 22, la paroi latérale 28 qui jouxte cette section conique et une section d'extrémité de la paroi externe 261 du conduit interne 26. Dans la variante représentée, ces chambres périphériques 27', 27" ne contiennent pas d'élément d'absorption acoustique 29. Dans une autre variante de l'invention (non représentée), ces chambres périphériques 27', 27" pourront contenir un élément d'absorption acoustique 29 qui, comprimé, épousera la forme conique des extrémités 221 et 222 du boitier 22.

Un élément de séparation 32 de forme sensiblement tubulaire possédant un diamètre externe sensiblement égal au diamètre interne du conduit interne 26 est par ailleurs disposé à l'intérieur du conduit interne 26 de manière à obturer les ouvertures traversantes 25. Cet élément de séparation 32 est avantageusement formé dans un matériau hydrophobe, de manière à empêcher une circulation d'eau entre le canal central 262 défini par le conduit interne 26 et les chambres périphériques 27. Ainsi, l'eau qui se serait formée suite à la condensation du fluide d'échappement lors de son passage dans le système d'échappement 14 ne pourra pas pénétrer à l'intérieur des chambres périphériques 27 et imprégner les éléments d'absorption acoustiques 29. Cet élément de séparation 32 permet donc d'éviter que les éléments d'absorption acoustiques 29 soient détériorés et génèrent une perte de capacité d'absorption phonique pour le silencieux 20. Le matériau constitutif de l'élément de séparation 32 possédera en outre une porosité à l'air, de manière à permettre une circulation de gaz entre le canal central 262 du conduit interne 26 et les chambres périphériques 27. L'élément de séparation 32 pourra ainsi être avantageusement constitué d'un matériau non tissé imprégné d'un produit hydrophobe. Le grammage du matériau non tissé sera avantageusement compris entre 100 et 600 g/m². Le matériau non-tissé pourra par exemple être constitué de fibres polyester. Le traitement hydrophobe pourra par exemple consister à imprégner le matériau non-tissé d'un produit à base de fluor, tel qu'une résine fluorocarbonée.. Ainsi traité, l'élément de séparation 32 sera configuré à la fois pour assurer un transfert partiel de fluide gazeux entre le canal central 262 et les chambres périphériques 27, permettant ainsi d'atténuer les ondes acoustiques générées lors du passage du fluide gazeux dans le silencieux, et pour guider le fluide gazeux de manière préférentiel le long de la direction axiale dans le canal central 262, permettant ainsi de réduire la perte de charge lors du passage du fluide gazeux dans le silencieux. A cet effet, l'élément de séparation 32 possédera avantageusement une perméabilité à l'air supérieure ou égale à 200 l/m²/s sous une pression de 200 Pa et une résistivité au passage de l'air inférieure à 400000 N.s.m⁻⁴.

Selon une première variante de l'invention, l'élément de séparation 32 possédera une section transversale totalement circulaire, le diamètre externe de l'élément de séparation 32 correspondant sensiblement au diamètre interne du conduit interne 26. Selon une deuxième variante de l'invention, l'élément de séparation 32 possédera une section transversale hémicirculaire ou en forme de U, une partie de la surface périphérique interne du conduit interne 26 n'étant pas recouvert par l'élément de séparation 32. Dans cette deuxième variante, l'élément de séparation 32 sera toutefois configuré pour recouvrir toutes les ouvertures traversantes 25 du conduit interne 26. Chaque chambre périphérique 27 fermée par l'élément de séparation 32 au niveau d'une des ouvertures traversantes 25 forme ainsi un résonateur qui, à sa fréquence de résonance, peut absorber une certaine quantité d'énergie acoustique incidente. Une partie de l'énergie acoustique est ainsi piégée dans la chambre périphérique 27. La fréquence de résonance dépend des dimensions de la chambre périphérique 27, en particulier de sa profondeur et de sa longueur dans le sens axial, des dimensions des ouvertures traversantes 25 et des caractéristiques de l'élément de séparation 32.

Dans une configuration préférentielle de l'invention, le boîtier 22 et le conduit interne 26 seront constitués de matière thermoplastique, par exemple à base d'un matériau du type monomère de polypropylène / éthylène-propylène-diène (PP/EPDM), d'un matériau polypropylène du type PPT40 ou PPGF35, ou d'un matériau polyamide du type PA6GF35. Ces deux éléments pourront être assemblés ensemble, par exemple par soudage, au niveau de l'extrémité du conduit interne 26 qui jouxte la première partie 221 du boîtier 22. L'élément de séparation 32 pourra être surmoulé sur le conduit interne 26. L'élément de séparation 32 pourra notamment dépasser au niveau d'au moins l'un des bords d'extrémité du conduit interne 26. L'extrémité qui dépasse est ensuite repliée contre la paroi externe 261 du conduit interne 26 et soudée sur la surface intérieure 223 de la paroi externe du boîtier 22.

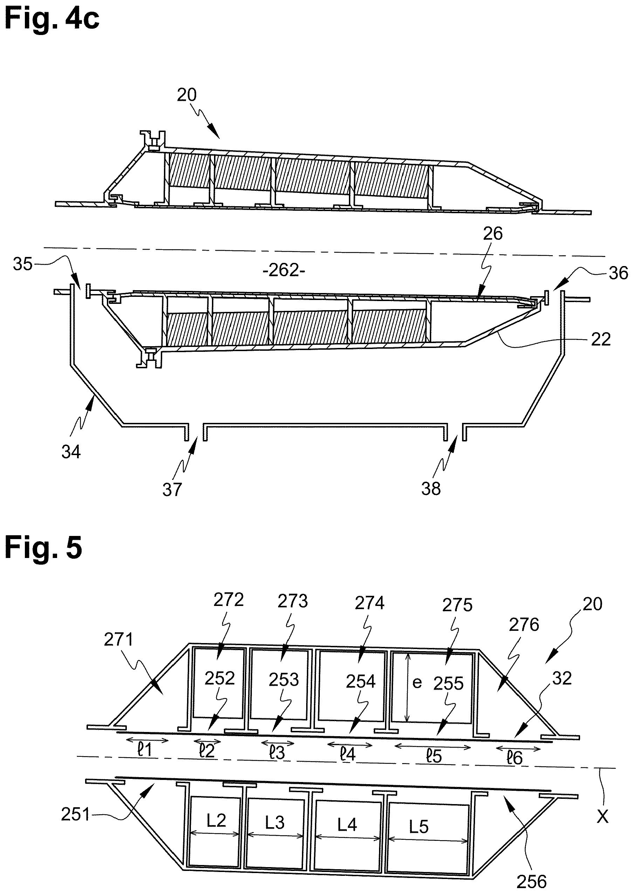

En référence à la figure 4c, il est représenté un deuxième mode de réalisation du silencieux 20 de l'invention. Ce deuxième mode de réalisation diffère de celui décrit précédemment par le fait qu'il comprend en outre un réservoir de liquide 34 disposé sous le boîtier 22. Ce réservoir 34 communique avec le canal central 262 au travers d'un premier passage 35, formé à travers le boîtier 22 en aval de l'orifice d'entrée 21 et en amont du conduit interne 26, et au travers d'un deuxième passage 36, formée à travers le boîtier 22 en aval du conduit interne 26 et en amont de l'orifice de sortie 23. Il possède en outre deux ouvertures de sortie 37 et 38 dans sa partie inférieure, lesdites ouvertures de sortie 37, 38 communiquant avec l'extérieur. Ainsi configuré, le réservoir 34 pourra recevoir l'eau issue de la condensation du fluide d'échappement et circulant à l'intérieur de la chambre interne 24, l'eau étant ensuite évacuée par gravité à l'extérieur au travers des ouvertures 37 et 38.

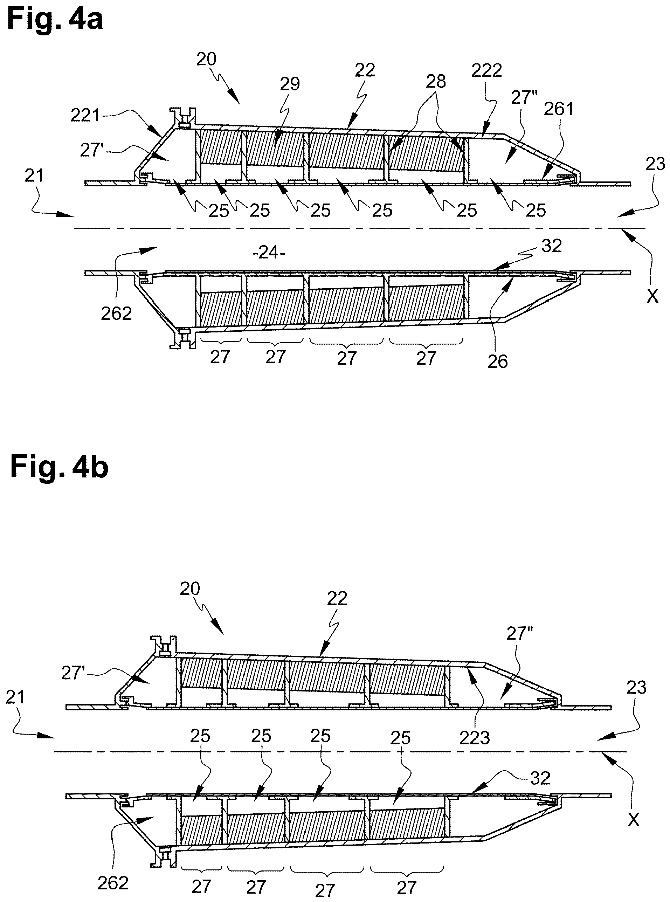

En référence à la figure 5, il est représenté de manière schématique le silencieux selon le mode de réalisation des figures 4a et 4b, dans laquelle certaines dimensions caractéristiques du silencieux 20 ont été spécifiées. En particulier, le silencieux 20 comporte une série de six chambres périphériques 271 à 276, respectivement une première chambre 271 communiquant avec le canal central 262 au travers de deux ouvertures traversantes 251 symétriques par rapport à l'axe X et de longueur axiale 11, une deuxième chambre 272 de longueur axiale L2 communiquant avec le canal central 262 au travers de deux ouvertures traversantes 252 symétriques par rapport à l'axe X et de longueur axiale I2, une troisième chambre 273 de longueur axiale L3 communiquant avec le canal central 262 au travers de deux ouvertures traversantes 253 symétriques par rapport à l'axe X et de longueur axiale I3, une quatrième chambre 274 de longueur axiale L4 communiquant avec le canal central 262 au travers de deux ouvertures traversantes 254 symétriques par rapport à l'axe X et de longueur axiale I4, une cinquième chambre 275 de longueur axiale L5 communiquant avec le canal central 262 au travers de deux ouvertures traversantes 255 symétriques par rapport à l'axe X et de longueur axiale I5, une sixième chambre 276 communiquant avec le canal central 262 au travers de deux ouvertures traversantes 256 symétriques par rapport à l'axe X et de longueur axiale I6. Les chambres périphériques 272 à 275 contiennent chacune un élément d'absorption acoustique en mousse de forme annulaire et d'épaisseur e.

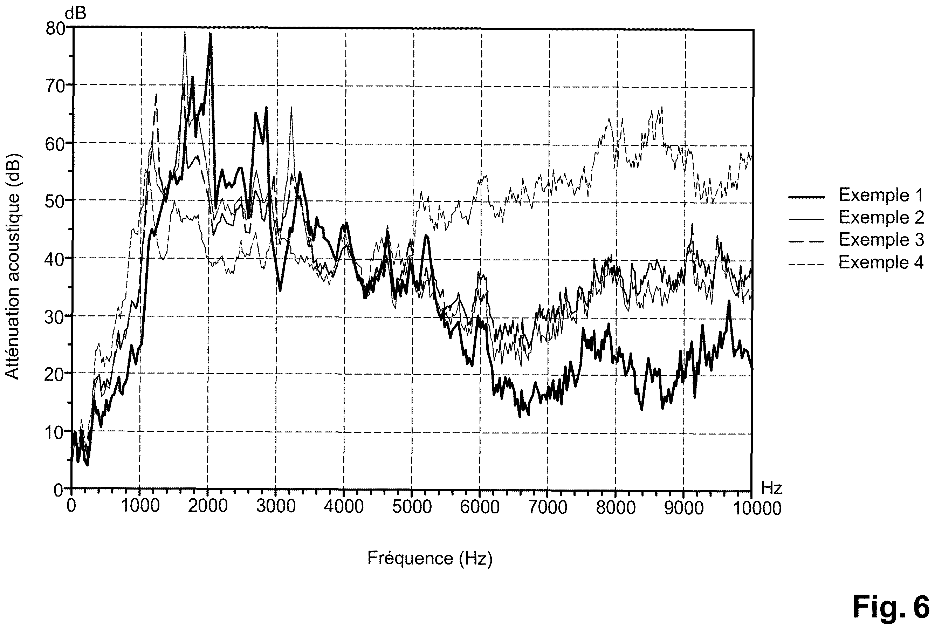

En référence à la figure 6, il est représenté un graphique permettant de comparer les performances acoustiques de plusieurs exemples de silencieux conformes à l'invention (Exemples 2 à 4) à celles d'un silencieux non conforme à l'invention (Exemple 1). Les silencieux des Exemples 2 à 4 possèdent la structure de silencieux représenté sur la figure 5, dans laquelle les dimensions caractéristiques précisées précédemment sont définies de la manière suivante :
- I1= 10 mm ; I2= 15 mm ; I3= 20 mm ; I4= 30 mm ; I5= 40 mm ; I6= 28mm
- L2= 25 mm ; L3= 30 mm ; L4= 35 mm ; L5= 40 mm
- e= 20 mm

Dans le silencieux de l'Exemple 2, l'élément de séparation 32 est formé d'un matériau non-tissé dont la perméabilité à l'air est égale à 1500 l/m²/s et possède une épaisseur de 1.5 mm.

Dans le silencieux de l'Exemple 3, l'élément de séparation 32 est formé d'un matériau non-tissé dont la perméabilité à l'air est égale à 1000 l/m²/s et possède une épaisseur de 2.5 mm.

Dans le silencieux de l'Exemple 4, l'élément de séparation 32 est formé d'un matériau non-tissé dont la perméabilité à l'air est égale à 200 l/m²/s et possède une épaisseur de 4.5 mm.

Le silencieux de l'Exemple 1 possède la même structure que celle des Exemples 2 à 4, mais s'en différentie par l'absence d'un élément de séparation 32.

Au vu de ce graphique, il faut tout d'abord observer que les exemples selon l'invention possèdent des performances acoustiques accrues par rapport à l'exemple non conforme à l'invention dans les plages de fréquences inférieure à 1.5 kHz et supérieure à 5 kHz. Ce gain est maximal pour l'Exemple 4, dont la perméabilité à l'air est la plus faible. Le gain en absorption acoustique est de l'ordre de +10 à +20 dB pour des fréquences comprises entre 400 Hz et 1000 Hz. Le gain ainsi observé en-dessous de 1.5kHz est particulièrement intéressant car il ne nécessite aucun volume supplémentaire pour le silencieux, contrairement aux silencieux de l'art antérieur. Ce graphique montre donc que, en plus d'empêcher une pénétration d'eau à l'intérieur des chambres périphériques 27, l'élément de séparation 32 permet également d'améliorer les performances acoustiques du silencieux pour certaines plages de fréquences.

Une dégradation des performances acoustiques sur la plage de fréquences comprise entre 1 et 4 kHz doit toutefois être observée pour les silencieux selon l'invention. Toutefois, cette dégradation est relativement faible, voire négligeable, pour les Exemples 2 et 3.

Bien entendu, l'invention ne se limite pas aux modes de réalisation décrits cidessus et représentés sur les dessins annexés. Des modifications restent possibles, notamment du point de vue de la constitution des divers éléments ou par substitution d'équivalents techniques, sans sortir pour autant du domaine de protection de l'invention.

En particulier, au lieu d'être positionné à proximité de la bouche d'échappement comme représenté sur la figure 1, le silencieux de l'invention pourra également être disposé à proximité de la pile à combustible. Une autre solution envisageable pourra également consister à disposer un premier silencieux proche de la pile à combustible et un deuxième silencieux proche de la bouche d'échappement.

## Revendications

1. Silencieux (20) d'échappement pour une pile à combustible, comprenant :
- un boîtier (22) définissant une chambre interne (24), ledit boîtier (22) possédant un orifice d'entrée (21), à travers lequel peut entrer un fluide d'échappement en provenance d'une pile à combustible (10), et un orifice de sortie (23), à travers lequel peut sortir le fluide d'échappement, et ledit boîtier (22) logeant dans la chambre interne (24) :
- un conduit interne (26) traversé par un canal central (262) d'acheminement d'un fluide d'échappement, ledit conduit interne (26) possédant une paroi périphérique munie d'au moins une ouverture traversante (25), ladite ouverture traversante (25) étant fermée par un élément de séparation (32), et
- au moins une chambre périphérique (27, 27', 27") disposée autour du conduit interne (26) de manière à entourer totalement l'ouverture traversante (25), la chambre périphérique (27, 27', 27") pouvant être au moins partiellement remplie avec un élément d'absorption acoustique (29),
dans lequel l'élément de séparation (32) est formé dans un matériau hydrophobe, de manière à empêcher une circulation d'eau entre le canal central (262) et la chambre périphérique (27, 27', 27"), le matériau étant également poreux à l'air, de manière à permettre une circulation des gaz d'échappement entre le canal central (262) et la chambre périphérique (27, 27', 27").

2. Silencieux (20) selon la revendication 1, **caractérisé en ce que** la paroi périphérique du conduit interne (26) est munie d'une pluralité d'ouvertures traversantes (25) espacées le long d'une direction axiale (X) définie par le conduit interne (26), chaque ouverture traversante (25) étant totalement entourée par une chambre périphérique (27, 27', 27") disposée autour du conduit interne (26), ladite chambre périphérique (27, 27', 27") étant au moins partiellement remplie avec un élément d'absorption acoustique (29), chaque ouverture traversante (25) étant par ailleurs fermée par un élément de séparation (32) hydrophobe et poreux à l'air.

3. Silencieux (20) selon la revendication 2, **caractérisé en ce que** l'élément de séparation (32) possède une forme tubulaire à section circulaire ou en U, l'élément de séparation (32) étant disposé à l'intérieur du conduit interne (26) de manière à recouvrir toutes les ouvertures traversantes (25) dudit conduit interne (26).

4. Silencieux (20) selon l'une des revendications précédentes, **caractérisé en ce que** l'élément de séparation (32) est constitué d'un matériau non tissé imprégné d'un produit hydrophobe.

5. Silencieux (20) selon la revendication 4, **caractérisé en ce que** le produit hydrophobe est à base de fluor.

6. Silencieux (20) selon l'une des revendications précédentes, **caractérisé en ce que** l'élément de séparation (32) possède une perméabilité à l'air supérieure ou égale à 200 I/m²/s.

7. Silencieux (20) selon l'une des revendications précédentes, **caractérisé en ce que** l'élément de séparation (20) possède une résistivité à l'air inférieure à 400000 N.s.m⁻⁴.

8. Silencieux (20) selon l'une des revendications précédentes, **caractérisé en ce que** l'élément d'absorption acoustique (29) est formé d'une mousse, notamment une mousse polymère.

9. Silencieux (20) selon l'une quelconque des revendications précédentes, **caractérisé en ce que** chaque chambre périphérique (27, 27', 27") contient un élément d'absorption acoustique (29) de matière différente d'une chambre à une autre.

10. Silencieux (20) selon l'une des revendications précédentes, **caractérisé en ce qu'**il comprend en outre un réservoir de liquide (34) disposé sous le conduit interne (26), ledit réservoir (34) étant configuré pour recevoir un liquide circulant dans la chambre interne (24) à la fois en amont et en aval du conduit interne (26), ledit réservoir (34) possédant au moins une ouverture (37, 38) destinée à évacuer le liquide vers l'extérieur.

11. Silencieux (20) selon la revendication 10, **caractérisé en ce que** le boîtier (22) est muni d'un premier passage (35) disposé en aval de l'orifice d'entrée (21) et en amont du conduit interne (26) et d'un deuxième passage (36) disposé en aval du conduit interne (26) et en amont de l'orifice de sortie (23), le premier passage (35), respectivement le deuxième passage (36), communiquant avec le réservoir de liquide (34) de telle sorte qu'un liquide circulant dans le boîtier (22) peut s'écouler au travers dudit premier passage (35), respectivement dudit deuxième passage (36), avant de circuler, respectivement après avoir circulé, au travers du canal central (262).
